# EUROPEAN PATENT APPLICATION

(11) **EP 1 736 516 A1**
(43) Date of publication of application: **27.12.2006**
(21) Application number: 05728566.0
(22) Date of filing: 11.04.2005
(51) Int. Cl.: C09D 201/00, C09D 5/00, C09D 5/16, C09D 7/12, C09D 183/02

(54) **ANTIFOULING COATING COMPOSITION**

(30) Priority: 12.04.2004 JP 2004116752
(71) Applicant: DAIKIN INDUSTRIES, LTD., Osaka-shi, Osaka 530-8323 (JP)
(72) Inventor: KURODA, Tarou, DAIKIN INDUSTRIES, LTD., Kita-ku, Osaka-shi, Osaka 5308323 (JP); TAIRA, Shigeharu, DAIKIN INDUSTRIES, LTD., Kita-ku, Osaka-shi, Osaka 5308323 (JP); NAKADA, Satoki, DAIKIN INDUSTRIES, LTD., Kita-ku, Osaka-shi, Osaka 5308323 (JP)
(74) Representative: Goddar, Heinz J.
(86) International application number: PCT/JP2005/007028
(87) International publication number: WO 2005/100495

(57) **Abstract**

There is provided a stain-proofing coating composition being capable of forming a uniform stain-proofing surface by blending a hydrophilic material in a low concentration irrespective of kind of a polymer for a coating. The stain-proofing coating composition comprises the hydrophilic material (A), the hydrophobic polymer (B) for a coating, the organic solvent (C) for the hydrophobic polymer for a coating and the other organic solvent (D); the other organic solvent (D) being a high boiling point organic solvent having a boiling point higher than that of the organic solvent (C) for the hydrophobic polymer for a coating by 5°C or more, and a ratio of the hydrophilic material (A) to the hydrophobic polymer (B) being from 1/99 to 50/50 (% by mass ratio).

## Description

### TECHNICAL FIELD

The present invention relates to a stain-proofing coating composition being capable of providing a stain-proofing coating film which is excellent in stain-proofing property and can be prepared by using general-purpose coating resins.

### BACKGROUND ART

In the current situation of stain-proofing technology, there are known a method of making a surface highly hydrophobic (water- and oil-repellency), a method of making a surface highly hydrophilic, a method of blending a photo-catalyst, and a method of making a coating film surface have a micro phase separation structure, so that both of a hydrophilic stain and a hydrophobic stain do not attach to the coating film surface.

For example, in JP2003-160681 and JP2003-161460, commercially available acrylic clear coatings (coating compositions comprising an acrylic resin, alkoxysilane and colloidal silica) are applied to exhibit a micro phase separation structure. However, unless a large amount of colloidal silica is used, the colloidal silica cannot be uniformly dispersed on a coating surface, and therefore, improvements are still necessary from the viewpoint of a mechanical strength and denseness of the surface structure.

Also JP2003-211569 discloses that staining marked due to a rain fall can be prevented by a coating film in which 0.04 to 1.0 cm² each of a hydrophilic coating film region and a hydrophobic coating film region are alternately arranged. However in such a hydrophilic/hydrophobic structure in which each of the regions has a large area, ability of preventing adhesion of stains cannot be exhibited sufficiently in the field of prevention of stain adhesion of common products located outdoor and exposed to various adhering staining substances in the air.

Further WO94/06870 and WO96/26254 disclose that an oligomer or polymer of organosilicate is blended to various resins to make an overall surface or a part of the surface hydrophilic. However, means to uniformly distribute the organosilicate on the surface is not described and stain-proofing property depends mainly on selection of a coating resin (for example, use of a fluorine-containing resin and silicone resin being excellent in stain-proofing property).

As described above, only by blending a hydrophilic material, there is a limit in thoroughly preventing adhesion of stains and substances having different properties, forms and sizes.

### DISCLOSURE OF INVENTION

It is an object of the present invention to provide a stain-proofing coating composition being capable of forming a uniform stain-proofing surface by blending a hydrophilic material in a low concentration irrespective of kind of a polymer for a coating to be used.

The present inventors have made experiments and intensive studies and have obtained a finding that by a specific combination of solvents to be used, a conventional concept such that a large amount of hydrophilic material is necessary to exhibit a stain-proofing property was exploded, and unexpectedly a stain-proofing property is enhanced when a content of the hydrophilic material is low. Further a wide range of applications have been studied based on such a finding, and as a result, the present invention was completed.

Namely, the present invention relates to a stain-proofing coating composition comprising a hydrophilic material (A), a hydrophobic polymer (B) for a coating, an organic solvent (C) for the hydrophobic polymer for a coating and an other organic solvent (D); the other organic solvent (D) being a high boiling point organic solvent having a boiling point higher than that of the organic solvent (C) for the hydrophobic polymer for a coating by 5°C or more, and a ratio of the hydrophilic material (A) to the hydrophobic polymer (B) being from 1/99 to 50/50 (% by mass ratio).

The present invention also relates to a stain-proofing coating film obtained by curing the stain-proofing coating composition of the present invention, and an article having the stain-proofing coating film.

In the present invention, the "boiling point" means a boiling point at 1 atmospheric pressure, and when the boiling point is represented by a temperature range, means an intermediate point thereof.

### BRIEF DESCRIPTION OF DRAWING

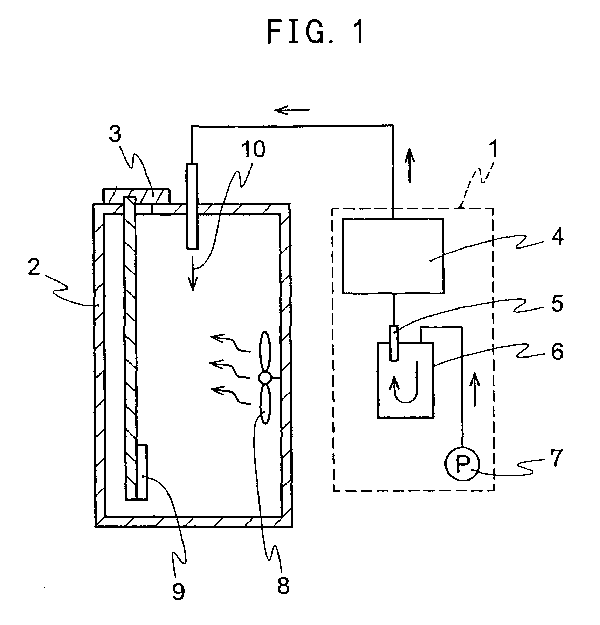

[Fig. 1] A diagrammatic view of a stain-proofing test equipment used in an accelerated stain-proofing test adopted in Examples 4 to 10.

### BEST MODE FOR CARRYING OUT THE INVENTION

The stain-proofing coating composition comprises a hydrophilic material (A), a hydrophobic polymer (B) for a coating, an organic solvent (C) for the hydrophobic polymer (B) for a coating and an other organic solvent (D), in which (I) the other organic solvent (D) is a high boiling point organic solvent having a boiling point higher than that of the organic solvent (C) for the hydrophobic polymer for a coating by 5°C or more, and (II) a ratio of the hydrophilic material (A) to the hydrophobic polymer (B) is from 1/99 to 50/50 (% by mass ratio).

A desirable embodiment of the present invention is such that the other organic solvent (D) functions as a dispersing medium for the hydrophilic material (A), and has affinity for the hydrophilic material (A) higher than that for the hydrophobic material (B) for a coating. As long as a combination thereof satisfies those conditions, both of the organic solvent (C) and the organic solvent (D) may be polar organic solvents, or any one of them may be a polar organic solvent and an another one may be a non-polar organic solvent. An especially preferred combination thereof is such that the organic solvent (C) for the hydrophobic polymer (B) for a coating is a non-polar organic solvent (C1) and the other organic solvent (D) is a polar organic solvent (D1) for dispersing the hydrophilic material (A).

One of the features of this embodiment is a combination use of the high boiling point polar organic solvent (D1) (for example, a solvent having a relatively high boiling point of not less than 115°C) and the non-polar organic solvent (C1) which has a boiling point lower than that of the high boiling point polar organic solvent (D1) by 5°C or more.

In such a combination use, the reason why a stain-proofing action is effective especially when the hydrophilic material (A) is within a low concentration range is not always obvious, but it can be presumed that the following mechanism is involved.

In the coating composition in which these organic solvents are present, it can be considered that the hydrophilic material is uniformly dispersed in a low concentration together with the high boiling point polar organic solvent as a dispersing medium in the solution of the hydrophobic polymer for a coating in which the hydrophobic polymer for a coating is dissolved in the non-polar organic solvent. If the concentration of the hydrophilic material exceeds a specific value, agglomeration of the hydrophilic materials begins and a uniformly dispersed state is broken, and therefore the concentration of the hydrophilic material need be within a range not causing such an agglomeration phenomenon.

A consideration to be taken into account is to form a coating film while maintaining such a uniformly dispersed state. However, in the present invention, because the boiling point of the polar organic solvent uniformly dispersing the hydrophilic material is higher than that of the non-polar organic solvent, during the formation of a coating film and drying, firstly the non-polar organic solvent is mainly evaporated, and then the hydrophobic polymer for a coating in the coating film becomes high in concentration and starts forming a matrix of the coating film. At this time, since the polar organic solvent not only is high in a boiling point but also has affinity for the hydrophilic material, its evaporation rate is low. As a result, it can be considered that the coating film is formed while maintaining a uniformly dispersed state of the hydrophilic material.

When the hydrophilic material is contained in a large amount, for example, in a state of being contained in the closest packing, the combination of the solvents of the present invention is not necessary, but a mechanical strength and adhesion of the coating film are lowered, and also there is a disadvantage from the viewpoint of cost.

In the present invention, the organic solvent (C) for a coating is used for the purpose of uniformly dissolving and dispersing the hydrophobic polymer (B) for a coating to form a matrix layer, and has the boiling point lower than that of the organic solvent (D) by 5°C or more. However kind of the organic solvent (C) to be used concretely varies depending on the boiling point of the other organic solvent (D), and when the other organic solvent (D) having a high boiling point is used, it is not necessary that the boiling point of the organic solvent (C) is not more than 115°C.

Also as described above, the non-polar organic solvent (C1) is preferable as the organic solvent (C) for a coating while the polar organic solvent (C2) may be used as long as it is a solvent being capable of forming a coating film by dissolving the hydrophobic polymer (B) for a coating.

Preferred examples of the non-polar organic solvent (C1) are, for instance, aromatic hydrocarbon solvents having a boiling point of from 80° to 150°C, aliphatic hydrocarbon solvents having a boiling point of from 50° to 130°C and the like.

Examples of the aromatic hydrocarbon solvents having a boiling point of from 80° to 150°C are, for instance, benzene (boiling point 80.1°C), toluene (boiling point 110°C), xylene (boiling point 140°C), ethyl benzene (boiling point 136°C), styrene (boiling point 145°C) and the like.

Examples of the aliphatic hydrocarbon solvents having a boiling point of from 50° to 130°C are, for instance, n-hexane (boiling point 65° to 69°C), heptane (boiling point 93° to 99°C), octane (boiling point 110° to 116°C), isooctane (boiling point 102° to 113°C), isohexane (boiling point 57° to 61°C), isobutane (boiling point 80° to 91°C), cyclohexane (boiling point 81°C), n-heptane (boiling point 98°C), trimethylpentane (boiling point 99°C), methylcyclohexane (boiling point 101°C) and the like. Those solvents may be used in a mixture of the same kinds or different kinds thereof.

Also the polar organic solvent (C2) for a coating is selected from high boiling point polar organic solvents (D1) and low boiling point polar organic solvents (D2) explained infra.

In the present invention, the other organic solvent (D) is used for the purposes of dispersing the hydrophilic material in the coating composition uniformly stably and further maintaining the uniform dispersion when forming a coating film. From this point of view, polar solvents are preferable and particularly the high boiling point polar organic solvents (D1) having a boiling point of not less than 115°C are preferable. However, a non-polar organic solvent may be used as long as it displays equivalent functions. Examples of such a non-polar organic solvent which can be used as the other organic solvent (D) are those having a boiling point higher by 5°C or more than that of the non-polar organic solvent (C1) for the hydrophobic polymer (B) for a coating among the above-mentioned non-polar organic solvent (C1).

In the present invention, the preferred high boiling point polar organic solvent (D1) may be selected from high boiling point polar organic solvents having a boiling point of not less than 115°C, further not less than 150°C, and not more than 250°C, further not more than 210°C, in consideration of the non-polar organic solvent (C1) to be used together. If the boiling point is lower than 115°C, in some cases, it is difficult to form a coating film while uniform dispersibility is maintained. On the other hand, if the boiling point is too high, there is a tendency that it takes time to form a coating film and curing failure occurs.

Specifically, examples thereof are, for instance, ether solvents having a boiling point of from 120° to 250°C, high boiling point alcohol solvents having a boiling point of from 115° to 250°C, ester solvents having a boiling point of from 115° to 250°C, ketone solvents having a boiling point of from 115° to 220°C, ester ether solvents having a boiling point of from 135° to 225°C and the like.

Examples of the ether solvents having a boiling point of from 120° to 250°C are, for instance, ethylene glycol monoethyl ether (boiling point 135°C), ethylene glycol monobutyl ether (boiling point 170°C), propylene glycol monomethyl ether (PGME, boiling point 120°C), diethylene glycol monoethyl ether (boiling point 200°C), diethylene glycol monobutyl ether (boiling point 225°C), diethylene glycol diethyl ether (boiling point 189°C), diethyl ether (boiling point 121.4°C), monobutyl ether (boiling point 171.2°C), mono n-hexyl ether (boiling point 208.3°C), monophenyl ether (boiling point 244.7°C), mono-2-ethylbutyl ether (boiling point 196.8°C), dibutyl ether (boiling point 203°C), propylene glycol methyl ether (boiling point 189°C), terpenemethyl ether (boiling point 195° to 225°C) and the like.

Examples of the high boiling point alcohol solvents having a boiling point of from 115° to 250°C are, for instance, n-butanol (boiling point 117°C), methoxybutanol (boiling point 160°C), diacetone alcohol (boiling point 168°C), cyclohexanol (boiling point 161°C), ethylene glycol (boiling point 197°C), propylene glycol (boiling point 188°C), 1,4-butanediol (boiling point 235°C), n-amyl alcohol (boiling point 138°C), isoamyl alcohol (boiling point 130.5°C), 3-methoxybutyl alcohol (boiling point 157° to 162°C), n-hexyl alcohol (boiling point 157.2°C), 2-methylpentanol (boiling point 147.5°C), sec-hexyl alcohol (boiling point 131.8°C), 2-ethylbutyl alcohol (boiling point 148.9°C), sec-heptyl alcohol (boiling point 160.4°C), heptanol-3 (boiling point 156.2°C), methylcyclohexanol (boiling point 174°C), sec-octyl alcohol (boiling point 178.6°C), n-octyl alcohol (boiling point 195° to 235°C), 2-ethylhexyl alcohol (boiling point 183.5°C), phenol (boiling point 182°C), 2,3-butylene glycol (boiling point 182°C), 1,2-propylene glycol (boiling point 188.2°C), o-cresol (boiling point 190.6°C), 3,3,5-trimethylcyclohexanol (boiling point 198°C), ethylene glycol (boiling point 197.2°C), 2-methyl-2,4-pentanediol (boiling point 197° to 198.5°C), pentanediol (boiling point 199°C), m-cresol (boiling point 202.2°C), p-cresol (boiling point 202.3°C), phenyl methyl carbinol (203.9°C), 1,3-butylene glycol (204° to 207.5°C), benzyl alcohol (205°C), nonyl alcohol (boiling point 213.5°C), hexanediol (boiling point 220.8°C), heptanediol (boiling point 224.9°C), n-decanol (boiling point 229° to 233°C), sec-undecyl alcohol (boiling point 225.4°C), trimethylnonyl alcohol (boiling point 225.2°C), dipropylene glycol (boiling point 231.8°C), 2-ethyl-1,3hexanediol (boiling point 244°C), diethylene glycol (boiling point 245°C) and the like.

Examples of the ester solvents having a boiling point of from 115° to 250°C are, for instance, isoamyl formate (boiling point 124.2°C), ethyl acetate (boiling point 120° to 127°C), n-butyl acetate (boiling point 126°C), diethyl carbonate (boiling point 126.8°C), sec-amyl acetate (boiling point 123° to 145°C), butyl propionate (boiling point 130° to 145°C), a mixture of amyl acetates (boiling point 115° to 156°C), ethylene glycol monomethyl ether acetate (boiling point 144.5°C), methyl lactate (boiling point 144.8°C), n-butyl acrylate (boiling point 145°C), methylamyl acetate (boiling point 146.3°C), n-amyl acetate (boiling point 147.6°C), ethyl lactate (boiling point 154°C), ethylene glycol monoethyl ether acetate (boiling point 156.4°C), isoamyl propionate (boiling point 150° to 160°C), 2-ethylbutyl acetate (boiling point 162.4°C), butyl acetate (boiling point 160° to 165°C), isoamyl acetate (boiling point 160° to 180°C), 3-methoxybutyl acetate (boiling point 164° to 174°C), methyl acetoacetate (boiling point 171.7°C), cyclohexyl acetate (boiling point 170° to 180°C), glycol diformate (boiling point 177.1°C), ethyl acetoacetate (boiling point 180.7°C), dimethyl oxalate (boiling point 180° to 190°C), methylcyclohexyl acetate (ortho: boiling point 182°C), butyl lactate (boiling point 188°C), methylcyclohexyl acetate (meta: boiling point 188°C), glycol diacetate (boiling point 190.5°C), dimethyl fumarate (boiling point 192°C), nonyl acetate (boiling point 192.4°C), 2-ethylhexyl acetate (boiling point 198.6°C), diethylene glycol monomethyl ether acetate (boiling point 209.1°C), benzyl acetate (boiling point 216°C), diethylene glycol monoethyl ether acetate (boiling point 217.7°C), diethyl maleate (222° to 225°C), tributyl borate (boiling point 231°C), dibutyl oxalate (boiling point 240° to 255°C), methoxyglycol acetate (boiling point 244°C), diethylene glycol monobutyl ether acetate (boiling point 246.4°C) and the like.

Examples of the ketone solvents having a boiling point of from 115° to 220°C are, for instance, methyl isobutyl ketone (boiling point 116°C), butyl n-butyl ketone (boiling point 127.2°C), 2,4-pentanedion (boiling point 140.5°C), ethyl butyl ketone (boiling point 147.8°C), methyl n-amyl ketone (boiling point 150.6°C), cyclohexanone (boiling point 156°C), methylcyclohexanone (boiling point 169.0° to 170.5°C), diisobutyl ketone (boiling point 168°C), diacetone alcohol (boiling point 166° to 169.1°C), methyl hexyl ketone (boiling point 174°C), phenthion (boiling point 191°C), acetonylacetone (boiling point 192.2°C), acetophenone (boiling point 201.7°C), isophorone (boiling point 215.2°C) and the like.

Examples of the ester ether solvents having a boiling point of from 135° to 225°C are, for instance, cellosolve acetate (boiling point 135° to 160°C), methyl cellosolve acetate (boiling point 144°C), ethyl cellosolve acetate (boiling point 156°C), methoxy butyl acetate (boiling point 166° to 176°C), butyl cellosolve acetate (boiling point 188° to 195°C), carbitol acetate (boiling point 204° to 225°C) and the like.

Examples of high boiling point amide solvents are, for instance, N-methyl-2-pyrrolidone (boiling point 204°C), N,N-dimethylacetamide (boiling point 165°C), N,N-dimethylformamide (boiling point 153°C) and the like.

As the high boiling point polar organic solvent, a mixture of the same kinds or different kinds of these solvents may be used.

It is necessary that the boiling point of the organic solvent (D) is higher than that of the organic solvent (C) by 5°C or more. It is to be noted that this difference in a boiling point is based on the following criteria when two or more solvents (three or more solvents in the solvent system) are used.

Namely, in the case of the organic solvent (D), a solvent used in the largest amount (mass) is assumed to be a base solvent, and when the amounts of the solvents are the same, a solvent having the highest boiling point is assumed to be a base solvent. Similarly in the case of the organic solvent (C), a solvent used in the largest amount (mass) is assumed to be a base solvent, and when the amounts of the solvents are the same, a solvent having the highest boiling point is assumed to be a base solvent. Accordingly, as the case may be, an organic solvent which has a difference in a boiling point of less than 5°C from the base solvent of the organic solvent (D) or has a boiling point higher than that of the base solvent of the organic solvent (D) may be present as a part of the organic solvent (C). Also there is a case where an organic solvent which has a difference in a boiling point of less than 5°C from the base solvent of the organic solvent (C) or has a boiling point lower than that of the base solvent of the organic solvent (C) may be present as a part of the organic solvent (D).

The boiling point difference may be selected experimentally depending on kinds and combinations of the solvents as long as it is not less than 5°C, and is preferably not less than 10°C, further preferably not less than 30°C. As the boiling point difference increases, a coating film can be formed in a lower concentration of the hydrophilic material with uniform dispersibility being maintained. An upper limit of the boiling point difference may be determined in consideration of easiness of preparation of the coating composition and stability of the composition.

In the preferred embodiment of the present invention, the low boiling point polar organic solvent (D2) having a boiling point of less than 115°C may be present as the polar organic solvent. This low boiling point polar organic solvent (D2) is usually blended for uniformly dispersing the hydrophilic material when preparing the coating composition. After the coating, even if the solvent (D2) is rapidly evaporated, since the high boiling point polar organic solvent (D1) is present, uniformity of dispersion of the hydrophilic material can be maintained.

Examples of such a low boiling point polar organic solvent (D2) are, for instance, low boiling point alcohols such as methanol (boiling point 65°C), ethanol (boiling point 78°C), isopropanol (boiling point 82.4°C), isopropyl alcohol (boiling point 82.3°C), allyl alcohol (boiling point 97.1 °C), propyl alcohol (boiling point 97.2°C), isobutanol (boiling point 107°C), sec-butanol (boiling point 99.5°C) and t-butanol (boiling point 82.4°C); ketones such as acetone (boiling point 56°C), methyl ethyl ketone (boiling point 79.6°C), diethyl ketone (boiling point 102°C) and methyl n-propyl ketone (boiling point 103°C); and esters such as methyl formate (boiling point 32°C), ethyl formate (boiling point 54.3°C), ethyl acetate (boiling point 77°C), propyl formate (boiling point 81°C), butyl formate (boiling point 106.6°C) and isobutyl acetate (boiling point 110° to 119°C) and the like. Further water (boiling point 100°C) may be contained inevitably or in a small amount.

Also as described above, the organic solvent (C) having a difference in a boiling point of less than 5°C from the other organic solvent (D) or having a boiling point higher than that of the other organic solvent (D) may be blended as the organic solvent (C) for the polymer as long as it is contained in a small amount (an amount smaller than that of the main organic solvent (C) for the polymer).

A specific combination of the organic solvent (C) for the polymer and the other organic solvent (D) is determined depending on kinds of the hydrophilic material and the hydrophobic polymer for a coating and various additives such as a pigment.

In the stain-proofing coating composition of the present invention, a preferred specific combination of the organic solvent (C) for the polymer and the other organic solvent (D) is a combination of the non-polar organic solvent (C1) and the high boiling point polar organic solvent (D1). Examples of such a combination are as follows, but the present invention is not limited to those examples. Figures in the parentheses represent boiling points (°C).

### (Example 1 of Combination)

(1-1) Non-polar organic solvent (C1)
   Aromatic hydrocarbon solvent having a boiling point of from 80° to 150°C
(1-2) High boiling point polar organic solvent (D1)
   Ether solvent having a boiling point of from 120° to 250°C and/or high boiling point alcohol solvent having a boiling point of from 115° to 250°C
(1-3) Other solvent (option)
   Low boiling point polar organic solvent (D2) having a boiling point of less than 115°C
   More specifically,

### (Example 1a of Combination)

(1-1a) Non-polar organic solvent
   Toluene (110)
(1-2a) High boiling point polar organic solvent
   Diacetone alcohol (168), propylene glycol monomethyl ether (120) and the like
(1-3a) Other solvent
   Isopropanol (82.4) and the like

### (Example 1b of Combination)

(1-1b) Non-polar organic solvent
   Xylene (140)
(1-2b) High boiling point polar organic solvent
   Diacetone alcohol (168) and the like
(1-3b) Other solvent
   Propylene glycol monomethyl ether (120), isopropanol (82.4) and the like

### (Example 1c of Combination)

(1-1c) Non-polar organic solvent
   Toluene (110)
(1-2c) High boiling point polar organic solvent
   Propylene glycol monomethyl ether (120) and the like
(1-3c) Other solvent
   Isopropanol (82.4), methanol (65), ethanol (78) and the like

### (Example 1d of Combination)

(1-1d) Non-polar organic solvent
   Toluene (110)
(1-2d) High boiling point polar organic solvent
   Propylene glycol monomethyl ether (120) and the like
(1-3d) Other solvent
   Isopropanol (82.4), methanol (65), ethanol (78), n-hexane (65 to 69) and the like

### (Example 1e of Combination)

(1-1e) Non-polar organic solvent
   Benzene (80.1)
(1-2e) High boiling point polar organic solvent
   Propylene glycol monomethyl ether (120) and the like
(1-3e) Other solvent
   Isopropanol (82.4), methanol (65), ethanol (78) and the like

### (Example 2 of Combination)

(2-1) Non-polar organic solvent (C1)
   Aliphatic hydrocarbon solvent having a boiling point of from 50° to 130°C
(2-2) High boiling point polar organic solvent (D1)
   Ether solvent having a boiling point of from 120° to 250°C and/or high boiling point alcohol solvent having a boiling point of from 115° to 250°C
(2-3) Other solvent (option)
   Low boiling point polar organic solvent (D2) having a boiling point of less than 115°C
   More specifically,

### (Example 2a of Combination)

(2-1a) Non-polar organic solvent
   Methylcyclohexane (101)
(2-2a) High boiling point polar organic solvent
   Propylene glycol monomethyl ether (120) and the like
(2-3a) Other solvent
   Isopropanol (82.4), methanol (65), ethanol (78) and the like

Next, the hydrophilic material (A) to be blended in the present invention may be hydrophilic fine particles or an oligomer or cooligomer of an organosilicate.

In the case of hydrophilic fine particles, it is preferable that the number average particle size thereof is not less than 5 nm because cohesion of stains can be prevented in a wide region. An upper limit thereof is preferably 200 nm, further preferably 50 nm from the viewpoint that cohesion of bacterium and organisms can be prevented effectively and transparency of a coating film is obtained. Specifically, the particle size is selected depending on environmental conditions and substances to be adhered.

Examples of such hydrophilic fine particles are fine particles of silica, titanium oxide, apatite, apatite having photocatalytic functionality, metals (copper, etc.) and the like. Those fine particles may be used in a combination of two or more kinds thereof.

Examples of suitable fine particles of silica are, for instance, colloidal silica, fumed silica and the like. Examples of commercially available colloidal silica are, for instance, methanol dispersions of MA-ST (number average particle size: 10 to 15 nm), MA-ST-MS (number average particle size: 17 to 23 nm) and the like; isopropanol dispersions of IPA-ST (number average particle size: 10 to 15 nm), IPA-ST-MS (17 to 23 nm), IPA-ST-L (40 to 50 nm) and the like; methyl ethyl ketone dispersions of MEK-ST (number average particle size: 10 to 15 nm), MEK-ST-MS (number average particle size: 17 to 23 nm) and the like; methyl isobutyl ketone dispersions of MIBK-ST (number average particle size: 10 to 15 nm) and the like; propylene glycol monomethyl ether acetate dispersions of PMA-ST (number average particle size: 10 to 15 nm) and the like; dimethylacetamide dispersions of DMAC-ST (number average particle size: 10 to 15 nm) and the like of NISSAN CHEMICAL INDUSTRIES, LTD. and the like.

Fine particles of titanium oxide may be inactive titanium oxide or titanium oxide having photocatalytic functionality. Examples of the former titanium oxide are those in the form of fine particles among titanium oxides usually used as a pigment or a filler.

Examples of usable titanium oxide fine particles having photocatalytic functionality are, for instance, ST-01, ST-21, processed products ST-K01 and ST-K03 thereof and water dispersion type STS-01, STS-02 and STS-21 of ISHIHARA SANGYO KAISHA, LTD.; SSP-25, SSP-20, SSP-M, CSB and CSB-M and coating type LACT1-01 and LACTI-03-A of SAKAI CHEMICAL INDUSTRY CO., LTD.; coating solutions of titanium oxide for photocatalysis of TKS-201, TKS-202, TKC-301, TKC-302, TKC-303, TKC-304, TKC-305, TKC-351 and TKC-352, and titanium oxide sol for photocatalysis of TKS-201, TKS-202, TKS-203 and TKS-251 of TAYCA CORPORATION; PTA, TO and TPX of Aritex Kabushiki Kaisha and the like. Also titanium oxides other than those mentioned above can be used.

Further titanium oxide surface-treated with apatite may be used. By treating with apatite, an effect of adsorbing bacterium and virus is enhanced and a sterilizing ability of the obtained coating film is enhanced.

Titanium oxide particles having photocatalytic functionality can be used together with the hydrophilic material of the present invention for the purpose of exhibiting only photocatalytic ability and sterilizing ability thereof. In that case, titanium oxide particles having a relatively large particle size (for example, a particle size exceeding 200 nm) may be used, and also hydrophobic particles may be used.

Apatite fine particles are, for example, fine particles of composite metal oxide represented by the formula:

Aₓ(BO_{y})_{z}Xₛ

wherein A is a metal atom such as Ca, Co, Ni, Cu, Al, La, Cr, Fe or Mg; B is P or S; X is hydroxyl or a halogen atom. With respect to this apatite, fine particles having a particle size of about 10 nm can be prepared, and good uniform dispersibility can be obtained in the same manner as in the above-mentioned silica fine particles.

Apatite having photocatalytic functionality is, for example one obtained by substituting at least a part of metal atoms A (for example, Ca) in the composite metal oxide (for example, calcium hydroxy apatite and the like) of the above-mentioned formula with atoms such as Ti atom being capable of imparting photocatalytic ability, and is disclosed in detain in JP2000-327315A, JP2003-175338A, JP2003-334883A and the like.

This apatite having photocatalytic functionality differs from other photocatalytic materials in that a base polymer is less degraded and durability of a coating film is excellent. Further those having a particle size of about 10 nm can be produced, and uniform dispersibility is good in the same manner as in the above-mentioned silica fine particles.

Apatite particles having photocatalytic functionality can be used together with the hydrophilic material of the present invention for the purpose of exhibiting only its photocatalytic ability and sterilizing ability. In that case, those having a relatively large particle size (for example, a particle size exceeding 200 nm) may be used, and also hydrophobic fine particles may be used.

Examples of the oligomer or cooligomer of organosiloxane are, for instance, hydrolysis polycondensation products (silicone oligomer or cooligomer) of at least one of organosilicates which are represented by the formula (I): RₚSiX_{(4-p)/2}, wherein R is hydrogen atom or at least one organic group, preferably an alkyl group, more preferably an unsubstituted alkyl group having 1 to 18 carbon atoms, most preferably an aryl group or alkyl group having 3 to 18 carbon atoms, preferably a phenyl group; X is an alkoxy group or a halogen atom; p is a numeral satisfying 0 < p < 2, and are described in, for example, WO94/06870, WO96/26254 and WO97/45502 pamphlets.

Examples of organosilicates are, for instance, tetra-functional silicates such as tetramethoxysilane, tetraethoxysilane, tetrapropoxysilane, tetrabutoxysilane and diethoxydimethoxysilane; and bi- and tri-functional silicates such as methyltrimethoxysilane, methyltriethoxysilane, methyltrichlorosilane, methyltribromosilane, methyltriisopropoxysilane, methyltri-t-butoxysilane, ethyltrimethoxysilane, ethyltriethoxysilane, ethyltrichlorosilane, ethyltribromosilane, ethyltriisopropoxysilane, ethyltri-t-butoxysilane, n-propyltrimethoxysilane, n-propyltriethoxysilane, n-propyltrichlorosilane, n-propyltribromosilane, n-propyltriisopropoxysilane, n-propyltri-t-butoxysilane, n-hexyltrimethoxysilane, n-hexyltriethoxysilane, n-hexyltrichlorosilane, n-hexyltribromosilane, n-hexyltriisopropoxysilane, n-hexyltri-t-butoxysilane, n-decyltrimethoxysilane, n-decyltriethoxysilane, n-decyltrichlorosilane, n-decyltribromosilane, n-decyltriisopropoxysilane, n-decyltri-t-butoxysilane, n-octatrimethoxysilane, n-octatriethoxysilane, n-octatrichlorosilane, n-octatribromosilane, n-octatriisopropoxysilane, n-octatri-t-butoxysilane, phenyltrimethoxysilane, phenyltriethoxysilane, phenyltrichlorosilane, phenyltribromosilane, phenyltriisopropoxysilane, phenyl-t-butoxysilane, dimethyldichlorosilane, dimethyldibromosilane, dimethyldimethoxysilane, dimethyldiethoxysilane, diphenyldichlorosilane, diphenyldibromosilane, diphenyldimethoxysilane, diphenyldiethoxysilane, phenylmethyldichlorosilane, phenylmethyldibromosilane, phenylmethyldimethoxysilane, phenylmethyldiethoxysilane, vinyltrichlorosilane, vinyltribromosilane, vinyltrimethoxysilane, vinyltriethoxysilane, vinyltriisopropoxysilane, vinyltri-t-butoxysilane, trifluoropropyltrichlorosilane, trifluoropropyltribromosilane, trifluoropropyltrimethoxysilane, trifluoropropyltriethoxysilane, trifluoropropyltriisopropoxysilane, trifluoropropyltri-t-butoxysilane, γ-glycidoxypropylmethyldimethoxysilane, γ-glycidoxypropylmethyldiethoxysilane, γ-glycidoxypropyltrimethoxysilane, γ-glycidoxypropyltriethoxysilane, γ-glycidoxypropyltriisopropoxysilane, γ-glycidoxypropyltri-t-butoxysilane, γ-methacryloxypropylmethyldimethoxysilane, γ-methacryloxypropylmethyldiethoxysilane, γ-methacryloxypropyltrimethoxysilane, γ-methacryloxypropyltriethoxysilane, γ-methacryloxypropyltriisopropoxysilane, γ-methacryloxypropyltri-t-butoxysilane, γ-aminopropylmethyldimethoxysilane, γ-aminopropylmethyldiethoxysilane, γ-aminopropyltrimethoxysilane, γ-aminopropyltriethoxysilane, γ-aminopropyltriisopropoxysilane, γ-aminopropyltri-t-butoxysilane, γ-mercaptopropylmethyldimethoxysilane, γ-mercaptopropylmethyldiethoxysilane, γ-mercaptopropyltrimethoxysilane, γ-mercaptopropyltriethoxysilane, γ-mercaptopropyltriisopropoxysilane, γ-mercaptopropyltri-t-butoxysilane, β-(3,4-epoxycyclohexyl)ethyltrimethoxysilane and β-(3,4-epoxycyclohexyl)ethyltriethoxysilane.

Examples of commercially available organosilicates are, for instance, Methyl Silicate series of Colcoat Co., Ltd. and the like.

It is necessary that the ratio of the hydrophilic material (A)/hydrophobic polymer (B) is 1/99 to 50/50 (% by mass ratio), preferably 1/99 to 45/55 (% by mass ratio). As described above, a stain-proofing effect is specifically enhanced when the content of hydrophilic material is within this specific range. A preferred range of the content of hydrophilic material may be optionally selected depending on kind of the hydrophilic material (A), kind and amount of the organic solvent (D), kind of the polymer (B) for a coating and additives to be used, and in the case of hydrophilic fine particles, is usually not less than 5/95 (% by mass ratio), further preferably not less than 10/90 (% by mass ratio), particularly preferably not less than 15/85, and not more than 30/70 (% by mass ratio), further preferably not more than 25/75 (% by mass ratio). On the other hand, in the case of silicate (co)oligomers, in some cases, the effect is exhibited even when the content is not more than 5/95 (% by mass ratio), and it is desirable to select the content within a range of not less than 1/99 (% by mass ratio) and not more than 30/70 (% by mass ratio).

In the present invention, the hydrophobic polymer (B) for a coating which forms a matrix of a coating film may be optionally selected depending on the hydrophilic material in consideration of dispersibility of the hydrophilic material (A) and a difference in water contact angle. Especially those having a water contact angle of not less than 60 degrees can be used suitably. Also the polymer may be resinous or elastomeric, and is preferably a crosslinkable polymer from the viewpoint that mechanical properties of a coating film can be enhanced.

It is preferable that the hydrophobic polymer (B) for a coating is a non-fluorine-containing hydrophobic polymer from the viewpoint of price, applicability (baking conditions) and handling when making a coating composition. The hydrophobic polymer (B) may be a fluorine-containing polymer.

Examples of hydrophobic resins for coatings are acrylic resins, acryl silicone resins, fluorine-containing resins, silicone resins, urethane resins, polyesters, polyolefins and the like. Specifically, suitable examples thereof are homopolymers obtained by solely radical-polymerizing hydrophobic monomers, for instance, methacrylic acid esters such as methyl (meth)acrylate, ethyl (meth)acrylate, propyl (meth)acrylate, butyl (meth)acrylate, 2-ethylhexyl (meth)acrylate and stearyl (meth)acrylate; aromatic vinyl monomers such as styrene and vinyl toluene; olefins such as ethylene, propylene and butylene; fluorine-containing monomers such as tetrafluoroethylene, trifluoroethylene, vinylidene fluoride, trichlorotrifluoroethylene and perfluorooctylethyl (meth)acrylate; vinyl silane monomers; butadiene; and vinyl chloride, and copolymers of those hydrophobic monomers, and copolymers of those hydrophobic monomers with other copolymerizable ethylenic unsaturated monomers, and the like.

Suitable advantageous hydrophobic resins are acrylic resins, acryl silicone resins, urethane resins and the like from the viewpoint of price, availability and wide applications.

Preferred as an acrylic resin are crosslinkable acrylic resins having a functional group, and hydrophobic property of the resin can be controlled by regulating hydrophobic property of a substituent of an ester portion thereof.

Preferred examples of the acryl silicone resin are particularly room temperature curing acryl silicone resins. Examples of such resins commercially available are, for instance, ACRYDIC A-9540 which is a low glass transition point type acryl silicone resin of DAINIPPON INC AND CHEMICALS, INCORPORATED, ACRYDIC BZ-1161 which is a high glass transition point type acryl silicone resin of DAINIPPON INC AND CHEMICALS, INCORPORATED and the like.

Fluorine-containing resins can be selected from known fluorine-containing resins, and preferred are copolymers mainly comprising tetrafluoroethylene (TFE), chlorotrifluoroethylene (CTFE) and hexafluoropropylene (HFP) because they are advantageous from the viewpoint of weather resistance, preparation of a coating composition and solubility in a solvent. Preferable fluorine-containing resins are those having a functional group and being crosslinkable. Examples of commercially available fluorine-containing resins are, for instance, Zeffle series of Daikin Industries, Ltd. and the like.

With respect to a relation to the hydrophilic material, acryl silicone resins having a functional group and the like are particularly preferable when the hydrophilic material is, for example, silica fine particles, titanium oxide fine particles, photocatalytic apatite fine particles and metal fine particles.

When crosslinkable hydrophobic polymers are used, it is preferable to blend known curing agents used for the respective polymers.

For example, when curable functional groups of crosslinkable polymers are hydroxyl, carboxyl, epoxy, amino, methylol and amide, preferable examples of curing agents are silane compounds such as dimethyldimethoxysilane, methyltrimethoxysilane, tetramethoxysilane, diethyldiethoxysilane, ethyltriethoxysilane, tetraethoxysilane and condensation products thereof. Examples of commercially available curing agents are, for instance, ACRYDIC A-9585 and ACRYDIC FZ-523 of DAINIPPON INC AND CHEMICALS, INCORPORATED and the like.

Also various dispersing agents may be used for enhancing dispersibility of solids such as hydrophilic particles. It is to be noted that dispersing agents which become absent from the surface of the hydrophilic particles after formation of a coating film are used. Preferred are, for example, low molecular weight dispersing agents which are evaporated when drying a coating film. In the case of baking a coating film, even high molecular weight dispersing agents can be used as long as they are evaporated or decomposed at baking.

Further various additives may be blended as case demands to such an extent not to impair the effects of the present invention. Examples of additives are, for instance, a pigment, a dye, a filler, an antioxidant, a leveling agent, a reinforcing fiber, an ultraviolet absorber, a photocatalyst, a light-stabilizer and the like.

An amount of the other organic solvent (D) to be blended is an amount enabling the hydrophilic material to be uniformly dispersed within the mentioned specific concentration and enabling such a dispersed state to be maintained during drying and curing of a coating film, and is optionally selected depending on kinds and amounts of the hydrophilic material (A), the hydrophobic polymer (B) for a coating and the organic solvent (C). If the amount of the other organic solvent (D) is too small, in some cases, dispersion stability of the hydrophilic material is lowered at drying, and if the amount is too large, it takes too much time for drying. Usually the amount of the other organic solvent (D) is not less than 50 parts by mass, preferably not less than 100 parts by mass and not more than 10,000 parts by mass, preferably not more than 2,000 parts by mass based on 100 parts by mass of the hydrophilic material.

An amount of the organic solvent (C) is an amount enabling the hydrophobic polymer for a coating to be uniformly dissolved and dispersed. If the amount is too small, in some cases, a film of the hydrophobic polymer is formed too fast and thereby the organic solvent (D) is hardly evaporated, and if the amount is too large, in some cases, a coating film cannot be formed with uniform dispersibility of the hydrophilic material being kept. Usually the amount of the organic solvent (C) is not less than 100 parts by mass, preferably not less than 200 parts by mass and not more than 10,000 parts by mass, preferably not more than 2,000 parts by mass based on 100 parts by mass of the hydrophobic polymer for a coating.

A concentration of the hydrophobic polymer for a coating in the composition is optionally selected depending on kind and amount of the hydrophilic material (A), kind of the hydrophobic polymer (B) for a coating, and kind and amount of the organic solvent (C). The concentration is usually not less than 2 % by mass, preferably not less than 5 % by mass, and not more than 50 % by mass, preferably not more than 20 % by mass.

The composition of the present invention can be prepared by mixing the organic solvent (D) dispersion (or solution) of the hydrophilic material to the organic solvent (C) solution (or dispersion) of the hydrophobic polymer for a coating.

A coating method is not limited particularly, and methods being capable of forming a uniform coating film, for example, a brush coating method, a spray coating method, a dipping method, a roll coating method and the like are used.

After the coating, it is possible to optionally carry out, as case demands, drying treatment including air drying, curing (crosslinking) treatment and baking treatment depending on kind of the hydrophobic polymer for a coating, or the like treatment.

A thickness of a coating film is not limited particularly, but is preferably not less than 200 nm, further preferably not less than 500 nm, especially preferably not less than 5 µm from the point that a coating film having a proper strength and stain-proofing property can be formed. An upper limit of the thickness is not limited particularly so long as cracking and breaking do not occur on a coating film.

In the present invention, at the time of drying, the organic solvent (C) and the organic solvent (D) are evaporated while maintaining a uniformly dispersed state of the hydrophilic material, and the uniformly dispersed state in the coating composition is substantially maintained in the coating film after the drying.

On the surface of a coating film or in the neighborhood thereof, a uniformly dispersed state of a hydrophobic region and a hydrophilic region, namely a so-called micro phase separation structure is present, and as a result, an excellent stain-proofing property is exhibited even with a relatively small amount of hydrophilic material.

In the above explanations, the hydrophobic polymer (B) is used as a polymer for a coating, but a hydrophilic polymer can be used as a polymer for a coating. In that case, a hydrophobic material may be used instead of the hydrophilic material. However, this combination is inferior to the combination of the present invention from the viewpoint of price, and is a problem to be investigated from now on.

The basic constitution of the stain-proofing coating composition of the present invention has been specifically explained supra in detail, and further various functions and properties may be imparted to the coating composition of the present invention. However in the case where additives to be added correspond to the hydrophilic material and the hydrophobic polymer of the present invention, those additives must meet the requirements of the present invention.

### (Anti-static function)

An anti-static action of a coating film is enhanced, and adhesion of substances to be statically adhered is further prevented by adding electrically conductive materials, for example, an electrically conductive polymer, an electrically conductive metal filler, carbon nanotube, carbon nanohom and the like and dispersing them on the surface of a coating film.

In order to obtain such an excellent anti-static effect, it is desirable to decrease a surface resistance to not more than 10¹²Ω.

### (Antibacterial and mildew-proofing functions)

Antibacterial and mildew-proofing functions can be imparted to the surface of a coating film in addition to the function of preventing adhesion of stains by using metals having antibacterial and mildew-proofing actions such as Ag, Zn and Cu as the hydrophilic particles or by using such metals together.

### (Impact resistance)

Impact resistance of the surface of a coating film can be enhanced by blending a rubber component or a thermoplastic elastomer.

### (Photodegrading property)

A photodegrading property can be imparted by using particles having a photocatalytic ability, for example, anatase-type titanium dioxide separately from the hydrophilic material of the present invention. In this case, the particles having a photocatalytic ability may have a relatively large particle size, or may be hydrophobic particles.

The stain-proofing coating composition of the present invention can be applied, for example, to the following articles.

### (1) Articles used in an environment where the articles contact human body or organisms:

### (1-1) Articles used in an environment where the articles contact human body:

### (Kind of substances to be adhered)

Various blood components (plasma, erythrocyte, plaque, leucocyte and the like), various blood fluids (lymph, saliva, tear, perspiration, fecaluria and the like), fat, skin fragment and the like.

The stain-proofing coating composition is useful for the following anti-thrombogenic materials, materials for preventing adhesion of protein, materials for preventing adhesion of fat and lipid and materials for preventing adhesion of urinary calculus and also for personal articles.

### (Specific examples of articles)

### Articles for medical use:

Artificial blood vessel, blood package, artificial organs, artificial coeur, artificial plumo, plumanary drainage, artificial skin, percutaneous device, urine package, urine catheter, intraocular lens, contact lens, artificial bone, artificial joint, artificial tooth, dental caries-preventing agent (to be coated on tooth), toilet bowl (free from cohesion of urinary calculus) and connection tube thereof and the like.

### Personal articles:

Bedclothes (comforter, bed, sheet), towel, gloves (difficult to become dirty), hair-dressing goods (comb, scissors, clippers, shaver, dryer), washing goods (toothbrush, bath tub, bath mat, stool for bathroom) and the like.

### (1-2) Articles used in an environment where organisms are easily adhered to the articles:

### (Kind of substances to be adhered)

Seaweed, mildew, various bacteria and the like.

### (Specific examples of articles)

Ship bottom material, ship bottom coating, dock for warships, material for exterior wall, materials for water-related articles (bathroom, sink, bath tub and the like), tile, water tank, irrigation canal, facilities using circulated water (various water pipes in water supply), underwater buildings (dam, port, bank and the like), canal, heat exchanger, drain pan, drain hose, drain pump, filters, drain port and drainage of air conditioner, foods factory (dairy products manufacturing line, tank, piping and the like), foods storage (freezer, refrigerator), foods processor (mixer, juicer, noodle-making machine, rice cooker and the like), dishes storage, dishes washing machine, dishes dryer, drink server (server of beer and juice, water cooler), show case, kitchen counter, canteens, water storage tank, pool, cup, straw, dishes (suitable for cup, pot and tea pot because no tea incrustations are not cohered thereto), cooking utensils (chopping board, sponge, kitchen knife), weight meter, shoes, stockings (prevention of athlete's foot), washing machine, dryer, can opener and the like.

### (2) Articles used in an environment where crystals grow easily:

### (2-1) Articles used in an environment where wax and sludge are easily cohered to the articles:

### (Kind of substances to be adhered)

Sludge in an ice machine oil (various decomposed oils and mineral oils), wax in various oils (for example, n-paraffin, etc.)

### (Specific examples of articles)

Filters, pressure reduction parts of freezer (capillary, various reducing valves, etc.) and the like.

### (2-2) Articles used in an environment where scales are easily cohered to the articles:

### (Kind of substances to be adhered)

Precipitated (for example, crystallized) inorganic substances in water. Many of scales are crystallized and precipitated in the form of calcium salt or silicate of carbonic acid, phosphoric acid, sulfuric acid or silicic acid.

### (Specific examples of articles)

Heat exchanger, boiler, cooling tower and the like.

### (2-3) Articles used in an environment where cohesion of ice easily arises:

### (Kind of substances to be adhered)

Water droplet, water, ice, snow and the like.

### (Specific examples of articles)

Fin of heat exchanger (for defrosting), roofing material (coating on roofing tile), antenna, power-transmission line (prevention of cutting and breakage due to snow or the like), exterior of ships (prevention of cohesion of ice), ice making pan, ice making machine, refrigerator, freezer (chamber, car), glass (various vehicles, buildings), outdoor electrical communication-related articles (various antennas such as parabola antenna, steel tower for communication, communication cable, electric wire, steel tower for power transmission, etc.), transportation vehicle-related articles (decks of ships and trains, boarding step of various vehicles, pantograph, outdoor protruding portions of vehicles such as trolley wire, wings of airplane, exterior of various vehicles), building-related articles (exteriors such as roofing tile, etc.), road, footway (difficult to freeze and easy to remove snow and ice), sole of shoes, tire (difficult to freeze), coatings for preventing salt damage, insulator (prevention of flashover), and the like.

### (3) Articles used in an environment exposed to the air:

### (3-1) Articles mainly used indoor:

### (Kind of substances to be adhered)

Lamp black, smoke and nicotine of tobacco and the like.

### (Specific examples of articles)

Indoor building materials (ceiling materials, wall materials, wall paper, etc.), blind, curtain, flooring material, carpet, transparent materials (illumination cover, glass, show window, instruments cover, glasses, goggles, etc.), mirrors (mirrors for vehicles, mirrors for domestic use, mirror for washstand, etc.), heat exchanger, air conditioner (fan, exterior, etc.), duct, air cleaner, humidifier hose (prevention of generation of allergen such as mildew and bacteria in a room), blow-off port, exhaust port, and neighboring portions thereof of air conditioner, wig, artificial hair, kitchen, range hood, clothes (not impregnated with odor), cosmetics (not impregnated with odor) and the like.

### (3-2) Articles mainly used outdoor:

### (Kind of substances to be adhered)

Dust (about 0.1 to 50 µm), crystals of brine around the seashore (about 0.1 to 10 µm), droplets of liquid (about 10 to 50 µm), exhaust gas of cars and the like.

### (Specific examples of articles)

Building materials for outdoor use (exterior wall of buildings, exteriors of vehicles, ships, airplanes and the like), road-related members (guardrail, signpost, signal, inner wall of tunnel, illuminator, covers of advertising boards, sound-proof wall, overhead bridge, etc.), transparent members (outdoor illumination cover, glass, covers for advertising boards, show window, greenhouse, cover for solar cell, cover for solar water heater, covers for instruments, glasses, goggles, etc.), mirrors (mirrors for vehicles, mirrors for use on road, etc.), heat exchanger, air conditioner (fan, exterior, etc.), duct, humidifier hose (prevention of generation of allergen such as mildew and bacteria in a room), blow-off port, exhaust port, and neighboring portions thereof of air conditioner, inside of chimney and neighboring portion thereof, wig, artificial hair, street closes (not impregnated with odor), cosmetics (not impregnated with odor), playing machine (machine in a pleasure ground and park) and the like.

### (4) Articles used in an environment where electric insulation is required:

### (Kind of substances to be adhered)

Electrically conductive substances such as carbon and carbides, and adhered substances showing electric conductivity due to impregnation of water.

### (Specific examples of articles)

Terminal blocks of various electric and electronic parts, plugs such as magnet plug, discharging portions of electric dust collector and ion generator and the like.

### (5) Articles used in an environment where paper, etc. is pasted: (Specific examples of articles)

Various indoor and outdoor walls, various playing machine, tunnel, electric-light pole, telephone booth and the like.

In the above-exemplified various articles, stains are easily adhered to places and portions where there is a flow of air as compared with other places and portions, and in such places and portions, a blackened state is often seen. Representative examples of machine to be located in such places are air conditioner, particularly room air conditioner and air cleaner, and prevention of stains on a surface thereof (especially lamp black, smoke and nicotine of tobacco, fine powder and dust in a room and the like) has been considered a long-standing problem. For example, stain is easily deposited on a room air conditioner to such an extent that generally a surface thereof need be cleaned 2 to 3 times a month.

The stain-proofing coating composition of the present invention is most suitable as a coating composition to be applied to an exterior and an inside of a duct of such an air conditioner. In an air conditioner and air cleaner having a surface of the coating film of the present invention, discoloration of the surface can be inhibited and the number of cleaning works can be greatly reduced.

### EXAMPLES

Then the present invention is explained by means of examples, but the present invention is not limited to those examples.

### EXAMPLE 1

A solvent type stain-proofing coating composition (composition 1-1) was prepared by stirring and mixing the following components according to the formulations shown in Table 1.

### (Blended components)

Hydrophobic polymer 1 for a coating: Toluene/isobutanol solution of high glass transition point type room temperature curable acryl silicone resin (Tg: 90°C) having a tertiary amino group produced by DAINIPPON INK AND CHEMICALS, INCORPORATED: 44 % by mass of solid content, trade name ACRYDIC BZ-1161
Curing agent 1: Silicon curing agent (trade name ACRYDIC FZ-523 produced by DAINIPPON INK AND CHEMICALS, INCORPORATED)
Hydrophilic material 1: Colloidal silica (IPA-ST produced by NISSAN CHEMICAL INDUSTRIES, LTD., a number average particle size of 10 to 15 nm, a 30 to 31 % by mass isopropanol dispersion)

This coating composition 1-1 was applied to a polystyrene sheet (150 mm × 80 mm × 5 mm) by spray coating so that a coating thickness became 5 µm after drying, followed by allowing to stand at 60°C for 30 minutes to produce a sample of a stain-proofing coating film (sample 1-1).

Also stain-proofing coating compositions (compositions 1-2 and 1-3) were prepared by blending the same components as above in amounts shown in Table 1, and samples 1-2 and 1-3 of a stain-proofing coating film were produced in the same manner as above.

With respect to those samples of a stain-proofing coating film, the following easy stain-proofing test 1 was carried out. The results are shown in Table 1.

### (Easy stain-proofing test 1)

### Test 1: Easy stain-proofing test using smoke of tobacco

After a sample and a blank (untreated polystyrene sheet) are allowed to stand in the indoor atmosphere for three days, they are put in a closed vessel (volume: 30 liters) and placed vertically and burning of one cigarette (Mild Seven of JAPAN TOBACCO INC.) is completed. After putting off the cigarette, the sample and the blank are allowed to stand for three hours, and a color difference (ΔE) before and after the test is determined from a reflectance of surfaces thereof with a photometer (color meter Z2000 manufactured by NIPPON DENSHOKU INDUSTRIES CO., LTD.) according to JIS Z8722. The test using a cigarette is carried out in the same manner as above with respect to a sample and a blank which have been allowed to stand in the indoor atmosphere for 6 days, 28 days and 50 days, and a color difference (ΔE) before and after the test is determined.

### Test 2: Water contact angle

In the above test 1, a water contact angle 3 days after, 6 days after, 28 days after and 50 days after, respectively is measured using a water contact angle meter.

### COMPARATIVE EXAMPLE 1

A comparative coating composition (1-C1) was prepared in the same manner as in the preparation of the composition 1-1 of Example 1 except that PGME was not mixed and the same amount of isopropanol was mixed. A comparative sample 1-C1 of a stain-proofing coating film was produced in the same manner as in Example 1 using this comparative composition 1-C1.

With respect to this comparative sample 1-C1 of a stain-proofing coating film, an easy stain-proofing test 1 was carried out in the same manner as in Example 1. The results are shown in Table 1.

**TABLE 1**

| | | Composition (parts by mass) | | | |
|---|---|---|---|---|---|
| | | 1-C1 | 1-1 | 1-2 | 1-3 |
| Components of coating composition | | | | | |
| Hydrophobic polymer 1 (solid content) | | 100 | 90 | 80 | 70 |
| Hydrophilic material 1 (solid content) | | 0 | 10 | 20 | 30 |

| Solvent | | | | | |
|---|---|---|---|---|---|
| Organic solvent (C) for polymer | | | | | |
| Toluene (bp 110°C) | | 800 | 800 | 800 | 800 |
| Other organic solvent (D) | | | | | |
| PGME (bp 120°C) | | - | 200 | 200 | 200 |
| Low boiling point polar organic solvent | | | | | |
| IPA (bp 82.4°C) | | 200 | 23.3 | 46.7 | 70.0 |
| I-BuOH (bp 108°C) | | 38.2 | 34.4 | 30.5 | 26.7 |
| Hydrophilic material/hydrophobic polymer (% by mass ratio) | | 0/100 | 10/90 | 20/80 | 30/70 |

| Stain-proofing test | | | | | |
|---|---|---|---|---|---|
| 3 days after ΔE | | 6 | 5 | 4 | 5 |
| | Water contact angle (degree) | 74 | 75 | 75 | 76 |
| 6 days after ΔE | | 6 | 5 | 3 | 4 |
| | Water contact angle (degree) | 75 | 74 | 76 | 74 |
| 28 days after ΔE | | 6 | 4 | 2 | 4 |
| | Water contact angle (degree) | 74 | 75 | 75 | 74 |
| 50 days after ΔE | | 6 | 4 | 2 | 4 |
| | Water contact angle (degree) | 75 | 74 | 76 | 74 |

### EXAMPLE 2

A solvent type stain-proofing coating composition (composition 2-1) was prepared by stirring and mixing the following components according to the formulations shown in Table 2.

### (Blended components)

Hydrophobic polymer 2 for a coating: Toluene/isobutanol solution of low glass transition point type room temperature curable acryl silicone resin (Tg: 60°C) having a tertiary amino group produced by DAINIPPON INK AND CHEMICALS, INCORPORATED: 44 % by mass of solid content, trade name ACRYDIC A-9540
Curing agent 2: Silicon curing agent (trade name ACRYDIC A-9585 produced by DAINIPPON INK AND CHEMICALS, INCORPORATED)

### Hydrophilic material 1

This coating composition 2-1 was applied to a polystyrene sheet (150 mm × 80 mm × 5 mm) by spray coating so that a coating thickness became 5 µm after drying, followed by allowing to stand at 60°C for 30 minutes to produce a sample (sample 2-1) of a stain-proofing coating film.

Also stain-proofing coating compositions (compositions 2-2 and 2-3) were prepared by using the same components as above in amounts shown in Table 2, and samples 2-2 and 2-3 of a stain-proofing coating film were produced in the same manner as above by using those compositions.

With respect to those samples of a stain-proofing coating film, an easy stain-proofing test 1 was carried out in the same manner as in Example 1. The results are shown in Table 2.

### COMPARATIVE EXAMPLE 2

A comparative coating composition (2-C1) was prepared in the same manner as in the preparation of the composition 2-1 of Example 2 except that diacetone alcohol was not mixed and the same amount of isopropanol was mixed. A comparative sample 2-C1 of a stain-proofing coating film was produced in the same manner as in Example 1 using this comparative coating composition 2-C1.

With respect to this comparative sample 2-C1 of a stain-proofing coating film, an easy stain-proofing test 1 was carried out in the same manner as in Example 1. The results are shown in Table 2.

**TABLE 2**

| | | Composition (parts by mass) | | | |
|---|---|---|---|---|---|
| | | 2-C1 | 2-1 | 2-2 | 2-3 |
| Components of coating composition | | | | | |
| Hydrophobic polymer 2 (solid content) | | 100 | 90 | 80 | 70 |
| Hydrophilic material 1 (solid content) | | 0 | 10 | 20 | 30 |

| Solvent | | | | | |
|---|---|---|---|---|---|
| Organic solvent (C) for polymer | | | | | |
| Toluene (bp 110°C) | | 800 | 800 | 800 | 800 |
| Other organic solvent (D) | | | | | |
| Diacetone alcohol (bp 168°C) | | - | 200 | 200 | 200 |
| Low boiling point polar organic solvent | | | | | |
| IPA (bp 82.4°C) | | 200 | 23.3 | 46.7 | 70.0 |
| I-BuOH (bp 108°C) | | 38.2 | 34.4 | 30.5 | 26.7 |
| Hydrophilic material/hydrophobic polymer (% by mass ratio) | | 0/100 | 10/90 | 20/80 | 30/70 |

| Stain-proofing test | | | | | |
|---|---|---|---|---|---|
| 3 days after ΔE | | 6 | 5 | 4 | 5 |
| | Water contact angle (degree) | 75 | 75 | 74 | 76 |
| 6 days after ΔE | | 6 | 4 | 3 | 4 |
| | Water contact angle (degree) | 75 | 75 | 76 | 74 |
| 28 days after ΔE | | 6 | 3 | 2 | 4 |
| | Water contact angle (degree) | 74 | 76 | 75 | 74 |
| 50 days after ΔE | | 6 | 2.5 | 1.5 | 4 |
| | Water contact angle (degree) | 75 | 75 | 76 | 74 |

### EXAMPLE 3

Stain-proofing coating compositions (compositions 3-1 to 3-3) were prepared in the same manner as in Example 2 except that an amount of diacetone alcohol was changed as shown in Table 3, and samples 3-1 to 3-3 of a stain-proofing coating film were produced in the same manner as above using those coating compositions.

With respect to these samples of a stain-proofing coating film, an easy stain-proofing test 1 was carried out in the same manner as in Example 1. The results are shown in Table 3.

**TABLE 3**

| | | Composition (parts by mass) | | | |
|---|---|---|---|---|---|
| | | 2-C1 | 3-1 | 3-2 | 3-3 |
| Components of coating composition | | | | | |
| Hydrophobic polymer 1 (solid content) | | 100 | 90 | 80 | 70 |
| Hydrophilic material 1 (solid content) | | 0 | 10 | 20 | 30 |

| Solvent | | | | | |
|---|---|---|---|---|---|
| Organic solvent (C) for polymer | | | | | |
| Toluene (bp 110°C) | | 800 | 300 | 300 | 300 |
| Other organic solvent (D) | | | | | |
| Diacetone alcohol (bp 168°C) | | - | 700 | 700 | 700 |
| Low boiling point polar organic solvent | | | | | |
| IPA (bp 82.4°C) | | 200 | 23.3 | 46.7 | 70.0 |
| I-BuOH (bp 108°C) | | 38.2 | 34.4 | 30.5 | 26.7 |
| Hydrophilic material/hydrophobic polymer (% by mass ratio) | | 0/100 | 10/90 | 20/80 | 30/70 |

| Stain-proofing test | | | | | |
|---|---|---|---|---|---|
| 3 days after ΔE | | 6 | 5 | 4 | 5 |
| | Water contact angle (degree) | 75 | 76 | 75 | 76 |
| 6 days after ΔE | | 6 | 4 | 3 | 4 |
| | Water contact angle (degree) | 75 | 76 | 76 | 75 |
| 28 days after ΔE | | 6 | 2.5 | 2 | 4 |
| | Water contact angle (degree) | 74 | 76 | 75 | 74 |
| 50 days after ΔE | | 6 | 2 | 1.5 | 4 |
| | Water contact angle (degree) | 75 | 76 | 76 | 75 |

### EXAMPLE 4

A solvent type stain-proofing coating composition (composition 4-1) was prepared by stirring and mixing the components shown in Table 4 in amounts shown in the same table to investigate an effect by an amount of the hydrophilic material.

This coating composition 4-1 was applied to a polystyrene sheet (150 mm × 80 mm × 5 mm) by spray coating so that a coating thickness became 5 µm after drying, followed by allowing to stand at 60°C for 30 minutes to produce a sample (sample 4-1) of a stain-proofing coating film.

Also stain-proofing coating compositions (compositions 4-2 to 4-5) were prepared by using the same components as above in amounts shown in Table 4, and samples 4-2 to 4-5 of a stain-proofing coating film were produced in the same manner as above.

With respect to those samples of a stain-proofing coating film, an accelerated stain-proofing test 2 in which an effect by moisture was eliminated was carried out. The results are shown in Table 4.

### (Accelerated stain-proofing test 2)

### Test method:

First, a test equipment explained below is manufactured and used. Smoke of ten commercially available cigarettes (Mild Seven of JAPAN TOBACCO INC.) generated in a smoke generator is introduced in an evaluation tank and is sufficiently stirred with a fan provided in the tank. Then at the time when the smoke in the tank becomes in a uniformly stirred state, the fan is stopped, a sample fixed to a jig for a test material is put in the tank and a degree of staining ten hours after is measured.

Staining is evaluated by a color difference (ΔbE) before and after the test using a model NR-1 color-difference meter of NIPPON DENSHOKU INDUSTRIES CO., LTD.

### Test equipment:

A test equipment of original development shown in Fig. 1 is used. This test equipment is comprised of a smoke generator 1, an evaluation tank 2 and a jig 3 for a sample.

The smoke generator 1 is comprised of a pump 7 for delivering air for burning of cigarettes, a vessel 6 for burning of cigarettes and a dehumidifying unit 4 for dehumidification of smoke of cigarettes 5, and dry smoke is generated.

The test tank 2 is 600 mm wide × 300 mm long × 380 mm high and is made of glass. The tank is equipped with the fan 8 on its side for stirring of smoke. Also the top cover of the tank 2 is equipped with an inlet of smoke 10 from the smoke generator, an opening for putting in and out a sample 9 and a temperature/humidity meter for measuring a temperature and humidity in the tank.

The sample jig 3 is so designed as to put the sample 9 in and out the tank 2 and enable the sample 9 to be fixed at a given position in the tank 2.

### COMPARATIVE EXAMPLE 3

A comparative coating composition (4-C1) was prepared in the same manner as in the preparation of the composition 4-1 of Example 4 except that the hydrophilic material 1 (colloidal silica) was not mixed., and a comparative sample 4-C1 of a stain-proofing coating film was produced in the same manner as in Example 4 using this comparative coating composition 4-C1.

With respect to this comparative sample 4-C1 of a stain-proofing coating film, an accelerated stain-proofing test 2 was carried out in the same manner as in Example 4. The results are shown in Table 4.

**TABLE 4**

| | Composition (parts by mass) | | | | | |
|---|---|---|---|---|---|---|
| | 4-C1 | 4-1 | 4-2 | 4-3 | 4-4 | 4-5 |
| Components of coating composition | | | | | | |
| Hydrophobic polymer 1 (solid content) | 100 | 85 | 80 | 75 | 70 | 55 |
| Hydrophilic material 1 (solid content) | 0 | 15 | 20 | 25 | 30 | 45 |

| Solvent | | | | | | |
|---|---|---|---|---|---|---|
| Organic solvent (C) for polymer | | | | | | |
| Toluene (bp 110°C) | 700 | 700 | 700 | 700 | 500 | 300 |
| Other organic solvent (D) | | | | | | |
| Diacetone alcohol (bp 168°C) | 300 | 300 | 300 | 300 | 500 | 700 |
| Low boiling point polar organic solvent | | | | | | |
| IPA (bp 82.4°C) | 0.0 | 35.0 | 46.7 | 58.3 | 70.0 | 105.0 |
| I-BuOH (bp 108°C) | 38.2 | 32.5 | 30.5 | 28.6 | 26.7 | 21.0 |
| Hydrophilic material/hydrophobic polymer (% by mass ratio) | 100/0 | 85/15 | 80/20 | 75/25 | 70/30 | 55/45 |

| Accelerated stain-proofing test | | | | | | |
|---|---|---|---|---|---|---|
| 1st test | 1.9 | 0.8 | 0.9 | 0.7 | 0.8 | 0.6 |
| 2nd test | 2.5 | 0.9 | 1 | 0.8 | 0.9 | 0.6 |
| 3rd test | 1.8 | 1.0 | 1.1 | 0.9 | 1 | 0.6 |
| 4th test | 3 | 1.1 | 1.1 | 1.7 | 1 | 0.6 |
| 5th test | 3 | 1.1 | 1.3 | 1.8 | 1.5 | 0.6 |

### EXAMPLE 5

Coating compositions (5-C1 to 5-4) were prepared in the same manner as in the preparation of the composition 4-2 of Example 4 except that a hydrophobic polymer 2 for a coating (ACRYDIC A-9540 (Tg: 60°C) produced by DAINIPPON INK AND CHEMICALS, INCORPORATED) was used as a hydrophobic polymer and an amount of colloidal silica was changed as shown in Table 5, and samples 5-C1 to 5-4 of a stain-proofing coating film were produced using those compositions 5-C1 to 5-4.

With respect to those samples 5-1 to 5-4 and 5-C1 of a stain-proofing coating film, an accelerated stain-proofing test 2 was carried out in the same manner as in Example 4. The results are shown in Table 5.

**TABLE 5**

| | Composition (parts by mass) | | | | |
|---|---|---|---|---|---|
| | 5-C1 | 5-1 | 5-2 | 5-3 | 5-4 |
| Components of coating composition | | | | | |
| Hydrophobic polymer 2 (solid content) | 100 | 90 | 80 | 70 | 55 |
| Hydrophilic material 1 (solid content) | 0 | 10 | 20 | 30 | 45 |

| Solvent | | | | | |
|---|---|---|---|---|---|
| Organic solvent (C) for polymer | | | | | |
| Toluene (bp 110°C) | 700 | 700 | 700 | 700 | 300 |
| Other organic solvent (D) | | | | | |
| Diacetone alcohol (bp 168°C) | 300 | 300 | 300 | 300 | 700 |
| Low boiling point polar organic solvent | | | | | |
| IPA (bp 82.4°C) | 0.0 | 23.3 | 46.7 | 70.0 | 105.0 |
| I-BuOH (bp 108°C) | 38.2 | 34.4 | 30.5 | 26.7 | 21.0 |
| Hydrophilic material/hydrophobic polymer (% by mass ratio) | 100/0 | 90/10 | 80/20 | 70/30 | 55/45 |

| Accelerated stain-proofing test | | | | | |
|---|---|---|---|---|---|
| 1st test | 0.9 | 1.0 | 0.7 | 0.8 | 0.7 |
| 2nd test | 1.1 | 1.1 | 0.8 | 0.9 | 0.9 |
| 3rd test | 1.5 | 1.7 | 1.1 | 1.1 | 1.1 |
| 4th test | 1.7 | 1.7 | 1.2 | 1.1 | 1.0 |
| 5th test | 2.8 | 2.4 | 1.5 | 1.9 | 1.5 |

### EXAMPLE 6

A solvent type stain-proofing coating composition (composition 6-1) was prepared by stirring and mixing the components shown in Table 6 in amounts shown in the same table to investigate an effect by amounts of the organic solvents C and D.

This coating composition 6-1 was applied to a polystyrene sheet (150 mm × 80 mm × 5 mm) by spray coating so that a coating thickness became 5 µm after drying, followed by allowing to stand at 60°C for 30 minutes to produce a sample (sample 6-1) of a stain-proofing coating film.

Also stain-proofing coating compositions (compositions 6-2 to 6-4) were prepared by blending the same components as above and using the organic solvent C and the organic solvent D in amounts shown in Table 6, and samples 6-2 to 6-4 of a stain-proofing coating film were produced in the same manner as above.

With respect to those samples of a stain-proofing coating film, an accelerated stain-proofing test 2 was carried out in the same manner as in Example 4. The results are shown in Table 6.

**TABLE 6**

| | Composition (parts by mass) | | | |
|---|---|---|---|---|
| | 6-1 | 6-2 | 6-3 | 6-4 |
| Components of coating composition | | | | |
| Hydrophobic polymer 1 (solid content) | 70 | 70 | 70 | 70 |
| Hydrophilic material 1 (solid content) | 30 | 30 | 30 | 30 |

| Solvent | | | | |
|---|---|---|---|---|
| Organic solvent (C) for polymer | | | | |
| Toluene (bp 110°C) | 800 | 700 | 500 | 300 |
| Other organic solvent (D) | | | | |
| Diacetone alcohol (bp 168°C) | 200 | 300 | 500 | 700 |
| Low boiling point polar organic solvent | | | | |
| IPA (bp 82.4°C) | 70.0 | 70.0 | 70.0 | 70.0 |
| I-BuOH (bp 108°C) | 26.7 | 26.7 | 26.7 | 26.7 |
| Hydrophilic material/hydrophobic polymer (% by mass ratio) | 70/30 | 70/30 | 70/30 | 70/30 |

| Accelerated stain-proofing test | | | | |
|---|---|---|---|---|
| 1st test | 0.9 | 0.8 | 0.9 | 0.6 |
| 2nd test | 1.0 | 0.9 | 1.0 | 0.9 |
| 3rd test | 1.9 | 1.0 | 1.2 | 1.8 |
| 4th test | 2.6 | 1.0 | 1.5 | 3.5 |
| 5th test | 2.8 | 1.5 | 1.9 | 4.0 |

### EXAMPLE 7

A solvent type stain-proofing coating composition (composition 7-1) was prepared by stirring and mixing the components shown in Table 7 in amounts shown in the same table to investigate an effect by a kind of the other organic solvent D.

This coating composition 7-1 was applied to a polystyrene sheet (150 mm × 80 mm × 5 mm) by spray coating so that a coating thickness became 5 µm after drying, followed by allowing to stand at 60°C for 30 minutes to produce a sample (sample 7-1) of a stain-proofing coating film.

Also stain-proofing coating compositions (compositions 7-2 to 7-C2) were prepared by using the same components as above and blending the organic solvent D and low boiling point polar organic solvent in amounts shown in Table 7, and samples 7-2 to 7-C2 of a stain-proofing coating film were produced in the same manner as above.

With respect to those samples of a stain-proofing coating film, an accelerated stain-proofing test 2 was carried out in the same manner as in Example 4. The results are shown in Table 7.

**TABLE 7**

| | Composition (parts by mass) | | | |
|---|---|---|---|---|
| | 7-1 | 7-2 | 7-C1 | 7-C2 |
| Components of coating composition | | | | |
| Hydrophobic polymer 1 (solid content) | 70 | 70 | 70 | 70 |
| Hydrophilic material 1 (solid content) | 30 | 30 | 30 | 30 |

| Solvent | | | | |
|---|---|---|---|---|
| Organic solvent (C) for polymer | | | | |
| Toluene (bp 110°C) | 800 | 800 | 800 | 800 |
| Other organic solvent (D) | | | | |
| Diacetone alcohol (bp 168°C) | 200 | - | - | - |
| PGME (bp 120°C) | - | 200 | - | - |
| Low boiling point polar organic solvent | | | | |
| IPA (bp 82.4°C) | 70.0 | 70.0 | 270.0 | 70.0 |
| I-BuOH (bp 108°C) | 26.7 | 26.7 | 26.7 | 226.7 |
| Hydrophilic material/hydrophobic polymer (% by mass ratio) | 70/30 | 70/30 | 70/30 | 70/30 |

| Accelerated stain-proofing test | | | | |
|---|---|---|---|---|
| 1st test | 0.9 | 0.9 | 0.9 | 1.3 |
| 2nd test | 1.0 | 0.5 | 1.7 | 2.8 |
| 3rd test | 1.9 | 1.4 | 3.8 | 3.6 |
| 4th test | 2.6 | 1.9 | 4.7 | 4.2 |
| 5th test | 2.8 | 2.2 | 5.3 | 5.0 |

### EXAMPLE 8

A solvent type stain-proofing coating composition (composition 8-1) was prepared by stirring and mixing the components shown in Table 8 in amounts shown in the same table to investigate an effect by a combination and amounts of the other organic solvents D.

This coating composition 8-1 was applied to a polystyrene sheet (150 mm × 80 mm × 5 mm) by spray coating so that a coating thickness became 5 µm after drying, followed by allowing to stand at 60°C for 30 minutes to produce a sample (sample 8-1) of a stain-proofing coating film.

Also stain-proofing coating compositions (compositions 8-2 to 8-4) were prepared by using the same components as above and blending two kinds of the other organic solvents D in amounts shown in Table 8, and samples 8-2 to 8-4 of a stain-proofing coating film were produced in the same manner as above.

With respect to those samples of a stain-proofing coating film, an accelerated stain-proofing test 2 was carried out in the same manner as in Example 4. The results are shown in Table 8.

**TABLE 8**

| | Composition (parts by mass) | | | |
|---|---|---|---|---|
| | 8-1 | 8-2 | 8-3 | 8-4 |
| Components of coating composition | | | | |
| Hydrophobic polymer 1 (solid content) | 70 | 70 | 70 | 70 |
| Hydrophilic material 1 (solid content) | 30 | 30 | 30 | 30 |

| Solvent | | | | |
|---|---|---|---|---|
| Organic solvent (C) for polymer | | | | |
| Toluene (bp 110°C) | 700 | 700 | 700 | 300 |
| Other organic solvent (D) | | | | |
| Diacetone alcohol (bp 168°C) | 300 | 150 | 60 | 350 |
| PGME (bp 120°C) | - | 150 | 240 | 350 |
| Low boiling point polar organic solvent | | | | |
| IPA (bp 82.4°C) | 70.0 | 70.0 | 270.0 | 70.0 |
| I-BuOH (bp 108°C) | 26.7 | 26.7 | 26.7 | 26.7 |
| Hydrophilic material/hydrophobic polymer (% by mass ratio) | 70/30 | 70/30 | 70/30 | 70/30 |

| Accelerated stain-proofing test | | | | |
|---|---|---|---|---|
| 1st test | 0.8 | 0.8 | 0.7 | 0.8 |
| 2nd test | 0.9 | 1.1 | 0.8 | 0.8 |
| 3rd test | 1.0 | 1.3 | 1.5 | 1.0 |
| 4th test | 1.0 | 1.6 | 2.8 | 1.5 |
| 5th test | 1.5 | 1.6 | 3.3 | 2.9 |

### EXAMPLE 9

A solvent type stain-proofing coating composition (composition 9-1) was prepared by stirring and mixing the components in amounts shown in Table 9 by using, as the organic solvent (C) for a polymer, xylene (bp 140°C) instead of toluene.

This coating composition 9-1 was applied to a polystyrene sheet (150 mm × 80 mm × 5 mm) by spray coating so that a coating thickness became 5 µm after drying, followed by allowing to stand at 60°C for 30 minutes to produce a sample (sample 9-1) of a stain-proofing coating film.

Also a stain-proofing coating composition (composition 9-2) was prepared by blending xylene and diacetone alcohol in amounts shown in Table 9, and a sample 9-2 of a stain-proofing coating film was produced in the same manner as above.

With respect to those samples of a stain-proofing coating film, an accelerated stain-proofing test 2 was carried out in the same manner as in Example 4. The results are shown in Table 9.

**TABLE 9**

| | Composition (parts by mass) | |
|---|---|---|
| | 9-1 | 9-2 |
| Components of coating composition | | |
| Hydrophobic polymer 1 (solid content) | 70 | 70 |
| Hydrophilic material 1 (solid content) | 30 | 30 |

| Solvent | | |
|---|---|---|
| Organic solvent (C) for polymer | | |
| Xylene (bp 140°C) | 800 | 500 |
| Other organic solvent (D) | | |
| Diacetone alcohol (bp 168°C) | 200 | 500 |
| Low boiling point polar organic solvent | | |
| IPA (bp 82.4°C) | 70.0 | 70.0 |
| I-BuOH (bp 108°C) | 26.7 | 26.7 |
| Hydrophilic material/hydrophobic polymer (% by mass ratio) | 70/30 | 70/30 |

| Accelerated stain-proofing test | | |
|---|---|---|
| 1st test | 0.7 | 0.5 |
| 2nd test | 0.9 | 0.6 |
| 3rd test | 1.5 | 1.0 |
| 4th test | 3.1 | 1.5 |
| 5th test | 3.3 | 1.8 |

### EXAMPLE 10

Solvent type stain-proofing coating compositions (compositions 10-1 to 10-3) were prepared by stirring and mixing the components shown in Table 10 and colloidal silica 1 to 3 having different average particle sizes in amounts shown in the same table to investigate an effect by a particle size of colloidal silica as the hydrophilic material.
Colloidal silica 1: IPA-STS of NISSAN CHEMICAL INDUSTRIES, LTD., a number average particle size of silica of 7 to 10 nm, a 30 to 31 % by mass isopropanol dispersion
Colloidal silica 2: IPA-ST of NISSAN CHEMICAL INDUSTRIES, LTD., a number average particle size of silica of 10 to 15 nm, a 30 to 31 % by mass isopropanol dispersion
Colloidal silica 3: IPA-STL of NISSAN CHEMICAL INDUSTRIES, LTD., a number average particle size of silica of 40 to 50 nm, a 30 to 31 % by mass isopropanol dispersion

Those coating compositions 10-1 to 10-3 were applied to a polystyrene sheet (150 mm × 80 mm × 5 mm) by spray coating so that a coating thickness became 5 µm after drying, followed by allowing to stand at 60°C for 30 minutes to produce samples (samples 10-1 to 10-3) of a stain-proofing coating film.

With respect to those samples of a stain-proofing coating film, an accelerated stain-proofing test 2 was carried out in the same manner as in Example 4. The results are shown in Table 10.

**TABLE 10**

| | Composition (parts by mass) | | |
|---|---|---|---|
| | 10-1 | 10-2 | 10-3 |
| Components of coating composition | | | |
| Hydrophobic polymer 1 (solid content) | 70 | 70 | 70 |
| Hydrophilic material (solid content) | | | |
| Colloidal silica 1 (7 to 10 nm) | 30 | | |
| Colloidal silica 2 (10 to 15 nm) | | 30 | |
| Colloidal silica 3 (40 to 50 nm) | | | 30 |

| Solvent | | | |
|---|---|---|---|
| Organic solvent (C) for polymer | | | |
| Toluene (bp 110°C) | 800 | 700 | 500 |
| Other organic solvent (D) | | | |
| Diacetone alcohol (bp 168°C) | 200 | 300 | 500 |
| Low boiling point polar organic solvent | | | |
| IPA (bp 82.4°C) | 70.0 | 70.0 | 70.0 |
| I-BuOH (bp 108°C) | 26.7 | 26.7 | 26.7 |
| Hydrophilic material/hydrophobic polymer (% by mass ratio) | 70/30 | 70/30 | 70/30 |

| Accelerated stain-proofing test | | | |
|---|---|---|---|
| 1st test | 1 | 0.8 | 0.8 |
| 2nd test | 2.2 | 0.9 | 1.0 |
| 3rd test | 2.3 | 1.0 | 1.2 |
| 4th test | 3.7 | 1.0 | 5.2 |
| 5th test | 4.1 | 1.5 | 5.7 |

### INDUSTRIAL APPLICABILITY

The present invention can provide a stain-proofing coating composition being capable of exhibiting an excellent stain-proofing effect by using a small amount of hydrophilic material as compared with conventional compositions even by use of cheap general-purpose hydrophobic polymers for coatings.

## Claims

1. A stain-proofing coating composition comprising a hydrophilic material (A), a hydrophobic polymer (B) for a coating, an organic solvent (C) for the hydrophobic polymer for a coating and an other organic solvent (D); said other organic solvent (D) being a high boiling point organic solvent having a boiling point higher than that of the organic solvent (C) for the hydrophobic polymer for a coating by 5°C or more, and a ratio of the hydrophilic material (A) to the hydrophobic polymer (B) being from 1/99 to 50/50 (% by mass ratio).

2. The stain-proofing coating composition of Claim 1, wherein said organic solvent (C) for the hydrophobic polymer for a coating is a non-polar organic solvent (C1) and said other organic solvent (D) is a polar organic solvent (D1) for the hydrophilic material; said polar organic solvent (D1) is a high boiling point polar organic solvent having a boiling point higher than that of the non-polar organic solvent (C1) by 5°C or more.

3. The stain-proofing coating composition of Claim 1 or 2, wherein the ratio of the hydrophilic material (A) to the hydrophobic polymer (B) is from 1/99 to 30/70 (% by mass ratio).

4. The stain-proofing coating composition of Claim 2 or 3, wherein said polar organic solvent (D1) is a high boiling point polar organic solvent having a boiling point of not less than 115°C.

5. The stain-proofing coating composition of Claim 4, which further contains a low boiling point polar organic solvent (D2) having a boiling point of less than 115°C.

6. The stain-proofing coating composition of any of Claims 1 to 5, wherein said hydrophilic material (A) is hydrophilic fine particles.

7. The stain-proofing coating composition of any of Claims 1 to 5, wherein said hydrophilic material (A) is an oligomer or cooligomer of organosilicate.

8. The stain-proofing coating composition of Claim 6, wherein said hydrophilic fine particles are fine particles of silica, fine particles of titanium oxide, fine particles of apatite, apatite having a photocatalytic ability and/or fine particles of metal.

9. The stain-proofing coating composition of any of Claims 1 to 8, wherein said hydrophobic polymer (B) for a coating is a crosslinkable polymer.

10. The stain-proofing coating composition of any of Claims 1 to 9, wherein said hydrophobic polymer (B) for a coating is a non-fluorine-containing hydrophobic polymer.

11. A stain-proofing coating film obtained by curing the stain-proofing coating composition of any of Claims 1 to 10.

12. The stain-proofing coating film of Claim 11, wherein the hydrophilic material (A) and the hydrophobic polymer (B) for a coating form a micro phase separation structure on the surface of the coating film.

13. An article having the stain-proofing coating film of Claim 11 or 12.
